(19) **Europäisches Patentamt**
**European Patent Office**
**Office européen des brevets**

(11) **EP 1 877 899 B1**

(12) **EUROPEAN PATENT SPECIFICATION**

(45) Date of publication and mention
of the grant of the patent:
**23.12.2009 Bulletin 2009/52**

(51) Int Cl.:
*G06F 9/46* (2006.01)  *G06F 1/00* (2006.01)
*H04L 29/06* (2006.01)

(21) Application number: **05745281.5**

(86) International application number:
**PCT/EP2005/004858**

(22) Date of filing: **04.05.2005**

(87) International publication number:
**WO 2006/117013 (09.11.2006 Gazette 2006/45)**

(54) **METHOD AND SYSTEM FOR PROCESSING PACKET FLOWS, AND COMPUTER PROGRAM PRODUCT THEREFOR**

VERFAHREN UND SYSTEM ZUM VERARBEITEN VON PAKETFLÜSSEN UND COMPUTERPROGRAMMPRODUKT DAFÜR

PROCEDE ET SYSTEME DE TRAITEMENT DE FLUX DE PAQUETS ET PROGRAMME INFORMATIQUE A CET EFFET

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**16.01.2008 Bulletin 2008/03**

(73) Proprietor: **Telecom Italia S.p.A.**
**20123 Milano (IT)**

(72) Inventors:
• **ABENI, Paolo**
**I-10148 Torino (IT)**

• **MILANI COMPARETTI, Paolo**
**I-56100 Pisa (IT)**
• **DI PAOLA, Sebastiano**
**I-10148 Torino (IT)**
• **LAMASTRA, Gerardo**
**I-10148 Torino (IT)**

(74) Representative: **Battipede, Francesco et al**
**Telecom Italia S.p.A.**
**Piazza L. Einaudi, 8**
**20124 MIlano (IT)**

(56) References cited:
**EP-A- 1 349 065**

EP 1 877 899 B1

## Description

Field of the invention

The invention relates to techniques for processing packet flows, e.g. in a communication network, and was developed with specific attention being paid to the possible application to ensuring network security, and more specifically, to techniques for Network Intrusion Detection.

Description of the related art

A Network Intrusion Detection System (NIDS) is a device that monitors activity in a network and analyzes e.g. each packet that flows in the network. The purpose of the analysis is to reveal security problems caused by the malevolent action of an external or internal agent. This agent can be an automatic system (i.e. a computer virus or a worm) or a human intruder who tries to exploit some weaknesses in the system for a specific purpose (i.e. unauthorized access to reserved data).

The typical implementation of a Network Intrusion Detection System is based on the paradigm of "Misuse Detection". This means that a sensor has a specific knowledge of the structure of the malevolent action. This knowledge is embedded in a set of "signatures", which resemble specific attack patterns. The heart of this device is a processing mechanism that quickly compares a large set of signatures with each packet, to decide whether the packet carries an attack or not; this is often referred as "pattern matching".

Of course, other approaches have been discussed in literature and implemented in real working devices; for example, systems that use artificial intelligence technique, or analyze the statistical properties of the network traffic; however, the pattern matching approach is the most common technology deployed in this field.

The effectiveness of a Network Intrusion Detection System is usually measured in terms of "false positives" and "false negatives". The former are packets that are erroneously flagged as dangerous; the latter are packets that effectively carry an attack, but are not matched by any signatures; hence, the Network Intrusion Detection System is not able to detect them.

The efficiency of a Network Intrusion Detection System is measured in terms of the sustained bandwidth of the monitored connection, or the fraction of packets discarded when the sensor is overwhelmed with an excessive amount of data to analyze.

The evolution of networking technology is one of the fundamental propellers of the Internet World. During the recent years, the end user bandwidth has increased an order of magnitude, while the bandwidth available for most sophisticated infrastructures is increasing even more remarkably toward figures difficult to predict.

However, this massive bandwidth increase also generates various performance problems in the context of Network Intrusion Detection Systems. In fact, the number of vulnerabilities is also increasing rapidly, and this effect is greatly amplified because of the increase in bandwidth. Hence, a standard off-the-shelf Network Intrusion Detection System may be unable to cope with a sustained bandwidth in the order of Gigabit/sec. The most obvious solution to this problem is to apply some sort of network traffic balancing technique to spread the load among several different and independent systems. In that way, standard Network Intrusion Detection System performance can be scaled up.

This approach poses however several limitations. First of all, more machines are needed, which means i.a. extra maintenance costs; moreover, the load balancing apparatus becomes a critical device in the infrastructure; if the device breaks down, operation of the overall system is discontinued.

A different approach is to implement a pipeline-based architecture on a multi-processor (i.e. multi-CPU) system; while efficient, this approach requires a careful engineering of the various component that make up the Intrusion Detection System. Moreover, effectively balancing the different activities among the different Central Processing Units (CPUs) may be difficult, because each CPU is usually bound to a specific operation.

The idea of using a load-balancing scheme to mitigate the effects of a high-bandwidth network load has been already discussed in the literature.

For instance, US-B-6 578 147 describes a system that uses multiple Network Intrusion Detection Sensors connected at an internetworking device, such as a router or switch, which performs a load balancing operation. The sensors operate in parallel and each receives a portion of traffic through the internetworking device, at a session-based level or at a lower (packet-based) level. Depending on the type of internetworking device (router or switch) the load balancing mechanism that distributes the packets can be internal or external to the internetworking device. Additionally, depending on the level of packet distribution (session-based or packet-based), the sensors share a network analyzer (if session-based) or both a network analyzer and a session analyzer (if packet-based).

This prior art document discloses i.a. an embodiment based on a modification of the routing software commonly deployed into standard Internet Protocol (IP) routers. Hence, the fraction of packets that are processed by a given sensor is based essentially on the Internet Protocol address of the destination, or other types of routing-like decision. In a further embodiment, the load balancing operation is performed by a switch, which is again an internetworking device, usually operating at a different layer of the network stack.

US-A-2004/0107361 describes another arrangement for high speed Network Intrusion Detection System implementation. This prior art solution exploits a technique where the end of interrupt signal is not delivered instantly, but a certain delay is introduced. This allows other packets, which arrive during that period of time, to be serviced without generating another interrupt. Interrupts introduce overhead, and reducing the overhead makes the system capable of coping with a larger network load. Moreover, the system introduces the use of a "ring buffer", which allows the software detection and the network device to share the buffer for their operation. By so doing, the system does not need to copy the packet from the device memory to the system memory

As specifically stated in this document, this solution uses a standard single-processor system in the implementation. The main advantage is a modification of the network device driver so to avoid multiple copies of the processed packets and to avoid an excessive number of interrupt requests to be generated, when the network load is excessively high.

US-B-6 631 422 describes a hardware system consisting in a modified Ethernet network device, which can directly process packets on-board (without the explicit intervention of the central CPU). Network input processing is distributed to multiple CPUs on multiprocessor systems to improve network throughput and take advantage of multiprocessor scalability. Packets are received by the network adapter and are distributed to N receive buffer pools set up by the device driver, based on N CPUs being available for input processing of packets. Each receive buffer pool has an associated CPU. Packets are direct memory accessed to one of the N receive buffer pools by using a hashing function, which is based on the source MAC address, source IP address, or the packet source and destination TCP port numbers, or all or a combination of the foregoing. The hashing mechanism ensures that the sequence of packets within a given communication session will be preserved. Distribution is effected by the network adapter, which sends an interrupt to the CPU corresponding to the receiving buffer pool, subsequent to the packet, using a Direct Memory Access mechanism, into the buffer pool. This optimizes the efficiency of the multiprocessor system by eliminating any reliance on the scheduler and increasing the bandwidth between the device driver and the network adapter, while maintaining proper packet sequences. Parallelism is thereby increased on network I/O processing, eliminating CPU bottleneck for high speed network I/Os and, thus, improving network performance.

EP 1 349 065 discloses a generic architecture for implementing a load balancing system on a symmetrical multi-processor (SMP). The system applies a hash function to incoming flows, in order to distribute them between the available CPUs. The whole process is interrupt driven, with the Ethernet card signaling a processor that a new packet has arrived. The processor that serves the interrupt executes a higher priority deferred procedure call (DPC), which hashes the packet, tag it and assign it for further processing to a specific CPU.

The article Z. Cao, Z. Whang, and E. Zegura: "Performance Hashing-Based Schemes for Internet Load Balancing", Tech. Rep. GIT-CC-99-14, College of Computing, Georgia Tech, 1999, describes several techniques that can be used to split a given traffic load among several independent processors.

The article S. Lu, J. Gong, S. Rui: "A Load Balancing Algorithm for High Speed Intrusion Detection", APAN Meeting, 2003 (Busan, Korea) describes a specific hashing function which is particularly suitable for Intrusion Detection applications.

Object and summary of the invention

The object of the invention is to increase the efficiency of those parallel processing arrangements (for use e.g. in Network Intrusion Detection System) where the computational load, that is the flow of incoming packets, is distributed among a set of computational units. A specific object of the invention is to provide such an improved arrangement adapted to rely on standard, off-the-shelf, hardware without requiring any special purpose device to attain such efficiency.

According to the present invention, that object is achieved by means of a method having the features set forth in the claims that follow. The invention also relates to a corresponding system as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

A preferred embodiment of the arrangement described herein thus provides for processing packet flows in a network by means of a multiprocessor system including a plurality of processing units (e.g. CPUs) by distributing the packets for processing among the processing units via a distribution function. The distribution function is selectively allotted to one of the processing units of the plurality.

The arrangement described herein aims at solving a number of basic problems that arise in prior art solutions, by implementing a specific software infrastructure adapted to support Gigabit/sec network traffic by using standard hardware, typically in the form of a standard Symmetric Multi-Processor (SMP) machine.

A Symmetric Multi-Processor is essentially a computer providing several independent CPUs that share the bus and the memory. Symmetric Multi-Processor machines are fairly common these days, and several computer manufacturers provide them at very convenient cost.

By way of direct reference, if e.g. a Network Intrusion Detection System were plainly run on a standard Symmetric Multi-Processor machine, no appreciable performance increments would result. For instance, in the case of a SMP including four CPUs, a fourfold performance increase over the performance of a single CPU would be theoretically expected. However, the performance increase would be much less. This is because the typical implementation of a Network Intrusion Detection System is of the single-task type, and, as such, is not able to take advantage of the multiple CPUs available in a SMP.

The arrangement described herein gives rise to a different architecture for a Network Intrusion Detection System, involving a modification in the network device driver, which scales up effectively on standard Symmetric Multi-Processor machines. The arrangement described herein is based on a modified multi-tasking mechanism that enables the implementation of a Network Intrusion Detection System application suitable for quasi-linear scaling on Symmetric Multi-Processor architectures.

A preferred embodiment of the arrangement described herein involves using a single Symmetric Multi-Processor machine with a single network port to process all the traffic from a link, e.g., a Gigabit/sec link. The corresponding system architecture does not require any intermediate device, or any external load balancing mechanism. All the processing work is performed on a single system, which is able to dynamically balance the traffic load among the several independent CPUs. By resorting to a specific scheduling arrangement, such a system is able to effectively distribute the computations required to perform both the load-balancing and the detection operations. In that way, system utilization is maximized by obtaining a better scaling factor.

Brief description of the annexed drawings

The invention will now be described, by way of example only, with reference to the enclosed figures of drawing, wherein:

- Figure 1 is a general block diagram of a system as described herein;
- Figure 2 is a functional block diagram representative of operation of one of the elements shown in Figure 1;
- Figure 3 is another functional block diagram representative of operation of one of the elements shown in Figure 1; and
- Figures 4 and 5 are flowcharts representative of operation of the system as described herein.

Detailed description of preferred embodiments of the invention

The exemplary processing arrangement described herein is aimed at processing an incoming flow of packets received via a so-called sensor interface 101 mapped over a network device and the related device driver by using a Symmetric Multi-Processor (SMP) machine 100 including a plurality CPUs of e.g. four CPUs.

The CPUs in question are not explicitly portrayed as such in any of the figures of the drawing attached that are primarily intended to portray the logical architecture implemented via said CPUs.

For instance, the incoming flow of packets can be comprised of packets exchanged within a network (not shown as a whole) with the processing arrangement described herein included in Network Intrusion Detection System (NIDS) associated with that network. The processing tasks performed for the purpose of intrusion detection within the CPUs of the SMP 100 can be of any known type, and the nature of this processing is per se of no specific momentum for the purpose of understanding and practicing the invention.

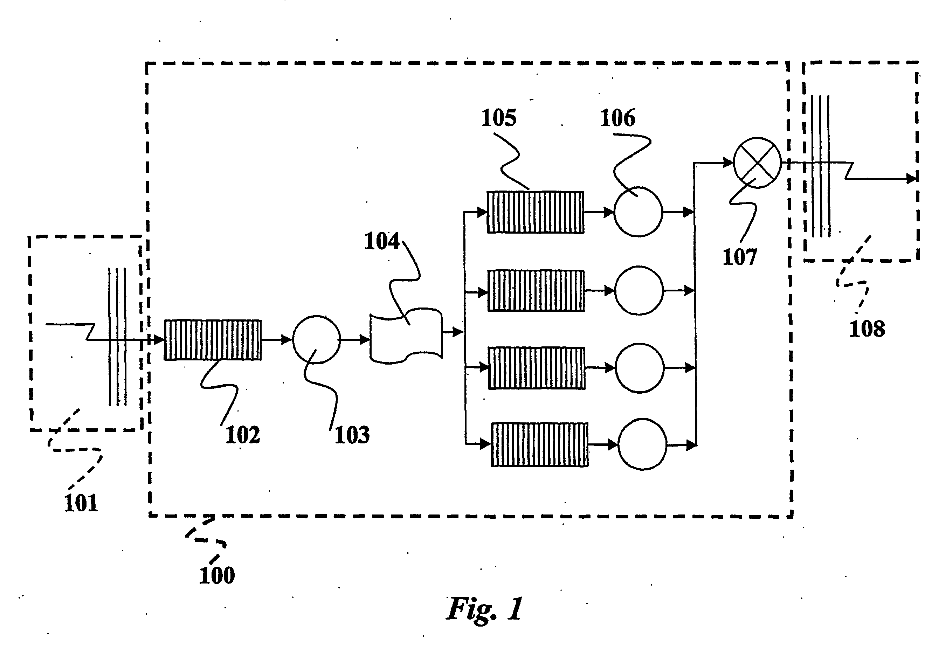

The system arrangement shown in Figure 1 is intended to operate in connection with at least two different network interfaces. The sensor interface 101 is used to receive the flow of packets that are to be analyzed. A second interface (which is not shown in the included diagrams) is used as a control interface to perform administration of the NIDS and to transmit alerts on detected security events. This is a fairly standard configuration for such a machine. Other arrangements are however admissible for the network interfaces.

The sensor interface 101 has sufficient BUS bandwidth and can operate in bus-master mode, using a specific main memory area to store the packet it collects; the memory area has to be configurable by the device driver. The device driver of the interface 101 is used to read packets. Such a device' typically operates the Ethernet controller in promiscuous mode (the system captures all the packets detected on the wire, including packets that are not directly addressed to that controller). In the arrangement described herein the device driver of the interface 101 operates by just placing the received packets in a shared memory buffer 102, allocated by the kernel for this purpose, without issuing any interrupt. Typically, normal packet processing (such as Transmission Control Protocol/Internet Protocol (TCP/IP) or other network stack operations) is disabled for packets arriving through the sensor interface. The driver makes packets accessible to a user-space program by using a specific memory mapping for the shared buffer. A user-space program is able to query the device driver and obtain a specific address that can be memory mapped in order to access the packets.

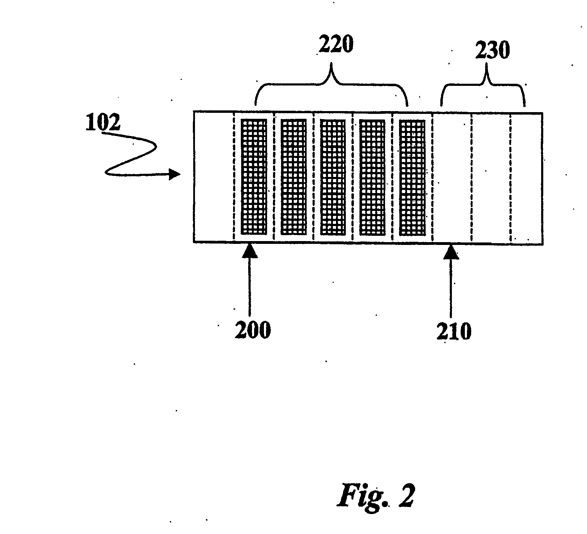

The structure of the shared memory buffer 102 is shown in Figure 2. In particular, the shared buffer 102 comprises filled and empty cells, and there are two different pointers that address different memory cells in order to read or write a packet. The reader pointer 200 addresses a filled cell that contains the first packet that will be processed by the system. The filled cells are designated with reference 220, while the empty cells are designated with reference 230. The writer pointer 210 addresses the first empty cell after the filled cells, and this empty cell will receive the first packet that will arrive from the network. The shared memory buffer 102 is thus used as a circular buffer.

Communication between the Ethernet controller and the user-space application is thus based on the standard "single-writer/single-reader" paradigm, hence this buffer does not need any mutual exclusion lock to be used by both the parties. If the buffer is full, the device driver discards the packet and flags this event in its statistic log. At any time, a user space module can query the statistics to know how many packets have been lost, or how many packets are pending in the queue.

The user-space portion of the sensor is implemented using N+1 tasks, where N is the number of independent Central Processing Units. The first task is a "polling task" 103; the other N tasks are "detection tasks" 106.

The polling task 103 reads the packet from the shared memory buffer 102, and processes them using a hash function 104. The hash function 104 tags each packet with a natural number in the range [0, ..., N -1]. The polling task 103 removes the packet from the shared memory buffer 102 and copies the packet in a queue implemented as a circular buffer 105. This buffer is shared between the polling task 103 and a single detection task 106 (thus being coupled to such single detection task), and again this is a single-reader/single-writer context, so that there is no need for mutual exclusion locks. Stated otherwise the single-reader/single-writer paradigm is applied also to the packets included in the buffers 105.

These other N detection tasks 106 perform the core operations of the sensor (the pattern matching and the other relevant activities). The tag generated by applying the hash function 104 identifies which task has to analyze the specific packet.

Whenever a dangerous condition is detected, the detection task 106 generates an alert, by invoking the alert generation subroutine 107, which in turn fills a memory block with the proper information, and provides a pointer to the memory where the packet is stored. This block is placed on a special purpose First-in First-Out (FIFO) queue 108, which makes it available to for further processing without the need of explicitly copying the memory that contains the alert. This First-in First-Out queue is implemented as a special device driver in the kernel, which provides direct access to the shared memory block in the shared memory buffer 102 containing the alert by using a dedicated memory mapping (via a mmap() system call). By using a custom First-in First-Out queue, it is avoided the extra copy required to process the alarm in another process.

An interesting aspect of the solution described herein lies in the proper choice of the hash function. This function preferably exhibits at least one of the following properties, more preferably exhibits all of them:

- Coherence: the function should tag with the same index different packets that belong to the same Network Flow; Network Flow means a sequence of packets that constitute a single TCP, UDP, ICMP, or other protocol session.. The fact that such packets are processed by the same detection task is advantageous because the detection method is a state-based process, and information regarding previous packets is important to make the correct decision;
- Fairness: the probability that a given packet, belonging to a specific network flow, is assigned to a specific detection task should be uniformly distributed and equal to 1/N. This property ensures a fair distribution of the load among the different CPUs;
- Security: any external observer should not be able to create a sequence of flows that are tagged according to a sequence chosen by the observer himself. Briefly speaking, it should be impossible for any external observer to create a sequence of independent flows that are all tagged with the same number. If this requirement is not met, an external attacker can force the system to work as a single CPU system, because the load distribution on the different CPUs is determined by the hashing function.

Preferably, the hash function should also be one that is efficient to calculate, and this means that its complexity should be a linear (or better, in the complexity sense) function of the dimension of the input.

The coherence property can be attained easily by restricting the hash calculation on the triplet: Packet Source IP, Packet Destination IP, IP Protocol.

If the Source Port and the Destination Port (when available) are also added to the input parameters, a further degree of randomization is obtained (better fairness). Fragmented packets may be assigned a tag which is not the same tag assigned to the reconstructed IP packet and to other, non fragmented packets in the same flow (where also ports can be taken into account for hash calculation). Re-injecting the packet in the proper processing queue, after the fragmented packets have been reassembled can solve this problem.

In order to guarantee the Security Property, it is sufficient to perform a XOR operation between the input data and a secret random key, having a length that matches that of the input data. The hashing function is non-linear, hence the XOR does not distribute itself over the result of the function; that is,

$$\mathrm{Hash}(A \oplus B) \neq \mathrm{Hash}(A) \oplus \mathrm{Hash}(B)$$

In this way, an attacker, who cannot directly observe the result of the hashing and does not know the secret key (but knows the algorithm that implement the hash function) will be unable to guess a sequence of input data that would give the same identical result for several different input patterns.

If the hash function uses an internal seed to make its computation, it is possible to attain the security property by randomly selecting this seed (there is no need for XOR-ing a secret sequence with the input data).

Based on the tests carried out so far by the inventors a function that is particularly suitable for this operation is the one described in "Hash Function for Hash Table Lookup" by R. J. Jenkins freely available at the date of filing of this application at the web site address: http://burtleburtle.net/bob/hash/evahash.html. This function embeds a random seed, which can be used to provide the requested security property. In fact, by randomly selecting the seed (of course, degenerate values such as 0, must be discarded during this selection), it is possible to modify the output of the hash function in an unpredictable way.

The mechanism adopted for selecting what activity has to be run on a given CPU at any instant of time is another characteristic of the solution described herein. This mechanism belongs to a category usually referred to as "scheduling algorithm" in the Operating System literature. The overall architecture of the system is composed by N+1 different tasks, and the system has N different CPUs. At start-up, the system detects how many CPUs are available and creates N different processes; each of them is allocated on a specific CPU, by using the "affinity" mechanism provided by the kernel. The "affinity" of a process indicates the kernel that a specific process should only run on a specific CPU. This favors the locality of the program, by avoiding computationally expensive operations related to the thread switch operation.

Each process can operate in three different roles:

- Polling Role,
- Detection Role, and
- Sleeping Role.

At each time, only a single process can operate in the Polling Role, and this process holds a special token for this purpose, the so-called "Polling Token". The integer parameters Psi+($\Psi$+) and Psi-($\Psi$-) represent thresholds on the Detection Queues 105, wherein the second threshold ($\Psi$-) is lower than the first threshold ($\Psi$+).

In a preferred embodiment, the following algorithm to schedule the activities in the system has been developed.

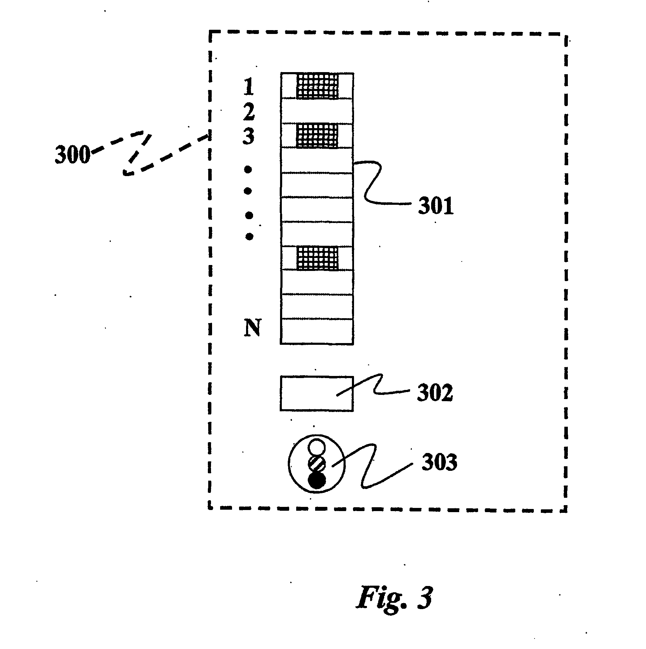

A Polling Token 300 is a special data structure, described in Figure 3, which holds the following information: an array of N Boolean flags 301, N being the number of detection tasks 105, i.e. N=4 in the example considered), used to mark a process which is Sleeping, and another Boolean flag 302, which indicates whether the Polling Token 300 is free (unassigned to any process) or not. The Polling Token 300 has to be accessed by several independent processes; hence, the corresponding data structure is protected by using a lock 303.

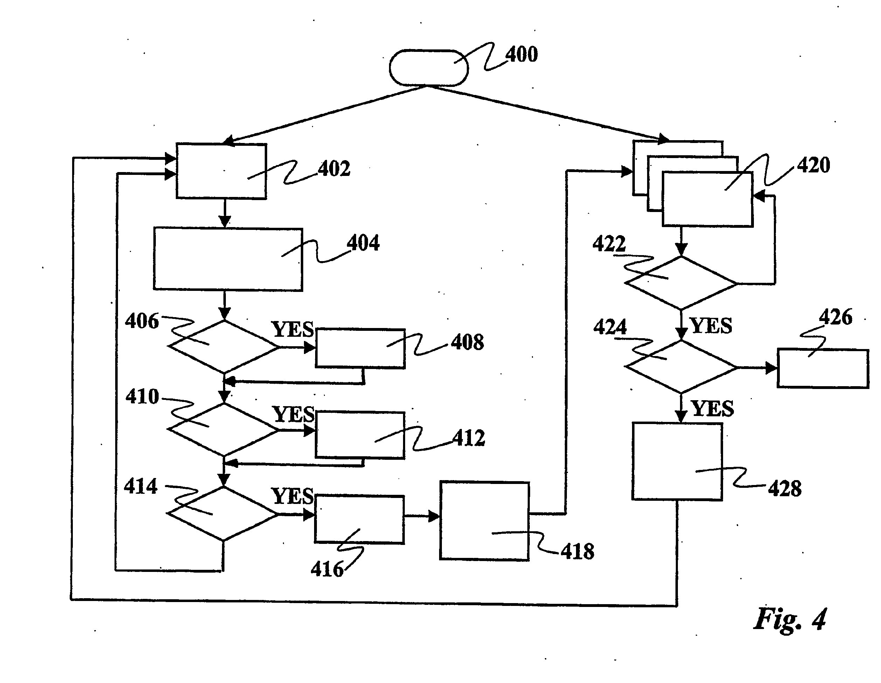

Figure 4 shows a flow-chart of operation of a first exemplary embodiment of the arrangement described herein.

1. At start-up (step 400), the Polling Token 300 is assigned to a random process; hence this process operates in the Polling Role, while the other N-1 processes operate in the Detection Role. All the other processes are put into the Sleep state, and the corresponding flag in the Polling Token 300 is set to true.

2. The first process is running the Polling Task, while the other processes are Sleeping.

3. The process in the Polling Role in a step 402 starts to extract packets from the memory buffer 102 shared with the Ethernet device driver 101; in a step 404 it applies the hash function on this packet, and inserts the packet in the Detection Queue 105 of the specific process, identified by the hash result. In a step 406 it is controlled if the Detection Queue 105 that should accept the packet is full. In affirmative case, in a step 408 the packet is dropped and a drop counter is incremented.

4. In a step 410 a control is made as to whether the process that serves a specific Detection Queue 105 is Sleeping. In affirmative case, the process in the Polling Role signals it, by using the following procedure:

- it acquires the lock 303 on the Polling Token 300,
- it resets the corresponding flag in the array,
- in a step 412 it awakes the corresponding

Sleeping process, and

- it releases the lock 303.

5. The process continues, in a step 414, to operate in the Polling Role until one of these three conditions is met:

- its own Detection Queue 105 contains more that $\Psi+$ packets,
- its own Detection Queue 105 contains more that $\Psi-$ packets and a packet is dropped on any of the Detection Queue 105, and
- its own Detection Queue 105 contains more that $\Psi-$ packets and the polling queue has been emptied.

When one of these conditions is met, in a step 416 the polling process releases the Polling Token 300 and in a step 418 switches to operate in the Detection Role; the procedure is the following:

- the process acquires the lock 303,
- one of the Sleeping process (if available) is awaked; usually the first one available in round-robin order is picked,
- the Polling Token 300 is marked as unassigned (free),
- the process switches to the Detection Role, and
- the process releases the lock 303.

5. When operates in the Detection Role, in a step 420 the process performs detection on a network packet. The process continues to do so until in a step 422 the Detection Queue 105 is empty; when this happens, the process has to choose whether to go to Sleep or switch to the Polling Role; the decision procedure is the following:

- the process acquires the lock 303,
- if the Polling Token 300 is unassigned (i.e. free), which is checked in a step 424, in a step'428 the process takes control of the Polling Token 300 and switches to the Polling Role,
- else, in a step 426 the process sets its own flag in the flag array, 301 of the Polling Token, releases the lock 303, and prepares to Sleep.

Experimenting with different values of $\Psi+$ and $\Psi-$ has indicated that it is safe to assume $\Psi- = 0$ in this case; proper values for $\Psi+$ are around 1/10 of the size of the Detection Queue 105.

An alternative implementation for the scheduling algorithm is now described; this implementation represents a second embodiment of the solution described herein.

The purpose of this second implementation is to provide a method that reduces the need for locking contention, by careful adoption of the single-reader/single-writer paradigm. In this alternative implementation, the Polling Token does not contain the array of flag 301 required in the former case. This array is substituted with an array of single-reader/ single-writer pair of counters, defined "Poll Request Counter" and "Poll Completed Counter". These counters can be accessed at any time without any lock. Each process has its own pair of counters.

The Polling Token 300 is still protected with a lock 303; however this lock 303 has to be acquired/released only under special conditions; in the previous implementation, it is necessary to acquire the lock 303 each time a process needs to modify its current state.

To better balance the computational load between the Polling Task and the Detection Tasks, the process that holds the Polling Token 300 is allowed to perform a single iteration in the Detection Role out of M iterations in the Polling Role. The M threshold is equal to $N*(N+1)/2$ (where N is the number of available CPUs). This initial value for M can be derived by the following assumption:

- Being $T_{Detection}$ the time required for a detection interaction and $T_{Polling}$ the time required for a polling interaction $T_{Detection}/T_{Polling} = (N+1)$ ; this is a reasonable upper limit for this ratio; usually, the ratio will be smaller;
- no packet is lost;

In a given time frame T, for the task that operates in the Polling Role:

- $K*T_{Detection} + K*M*T_{Polling} = T$ where K is the number of packet processed in the Detection Role while being in the Polling Role, in a time frame T.

While for the other tasks, that operate in Detection Role, is:

- $K'*T_{Detection} = T$ where K' is the number of packets that each Detection Task processes in a time frame T.

From the previous relationships, the value for K' can be calculated as:

-

$$K' = (K*M*T_{Polling} + K*T_{Detection})/T_{Detection}$$

Considering the total number of polled packets, and the total number of packet that are processed in the detection system, if no packet would be lost, the number of polled packets can be equal to the number of analyzed packets in a given time frame:

$$N_{Polling}(T) = K*M$$

$$N_{Detection}(T) = (N-1)*K' + K$$

By setting

$$N_{Polling}(T) = N_{Detection}(T)$$

it is

$$M = N + M*(N-1)*T_{Polling}/T_{Detection}$$

In general:

$$M = N/(1-(N-1)*T_{Polling}/T_{Detection})$$

If the first hypothesis is applied, by substituting the factor

$$T_{Polling}/T_{Detection} = 1/(N+1)$$

the value for the parameter M is

$$M = N/(1 - (N-1)/(N+1)) = N*(N+1)/2$$

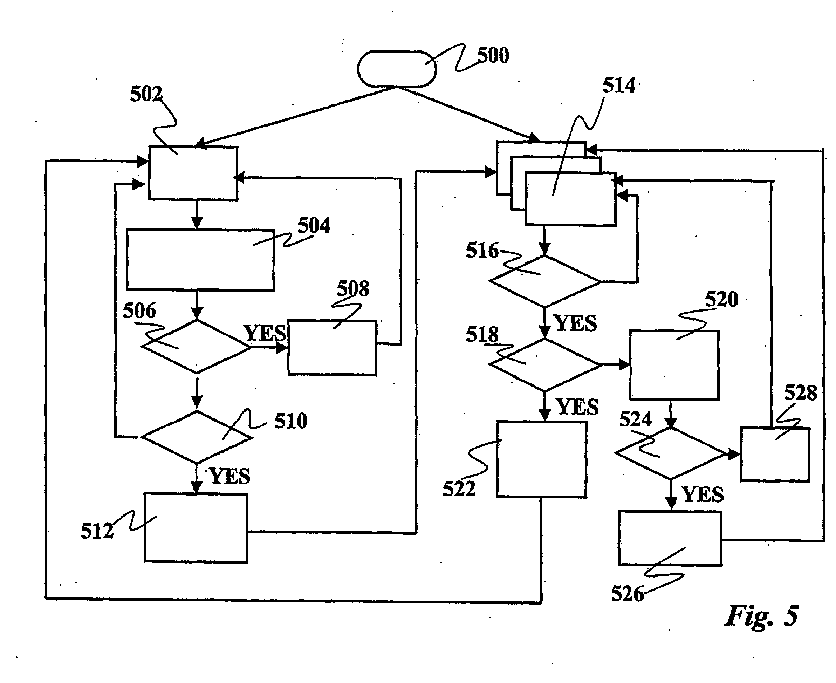

A second embodiment of the solution described herein will now be explained with reference to Figure 5.

1) After start-up (step 500), in a step 502 a random process is selected for holding the Polling Token 300; hence this process operates in the Polling Role, while the other N-1 processes operate in the Detection Role. The first process is running the Polling Task, while the other processes are running the Detection Task.
2) The process in the Polling Role in a step 504 starts to extract packets from the memory buffer 102 shared with the Ethernet device driver of the interface 101; it applies the hash function on this packet, and inserts the packet in the Detection Queue 105 of the specific process, identified by the hash result. The other processes, which run in Detection Mode, start to consume packets from their Detection Queues 105.

3) When the process that executes in the Polling Role, in a step 506 has completed M iterations, it executes in a step 508 a single iteration in Detection Role, and then resumes its Polling Role computation. This is a Temporary Role Switch.

4) The process continues to operate in Polling Role until in a step 510 one of these conditions holds true:

- its own Detection Queue 105 contains more that $\Psi+$ packets;
- it has completed more than P Temporary Role Switches. The value of P can be set arbitrarily; it does not influence the general operation of the method; a common value is half the length of the Shared Memory Buffer 102.
 Then, in a step 512, the process passes the Polling Token 300 to the next process. This is accomplished by:
- incrementing the Polling Token Request Counter of the destination process, and
- decrementing its own Polling Token Completed Counter.

Then, in a step 514, the process starts to operate in Detection Mode. If the number of packets in the shared memory buffer 102 is lesser than a pre-defined ratio of the full queue length, usually equal to the 50% of the queue length, the M value is incremented by one; if the number of packets is greater than a second pre-defined ratio of the full queue length, usually equal to the 75% of the queue length, the M value is decremented by one; otherwise, M is left untouched. The minimum value for M is N (the number of available CPUs).

5) The process that is chosen, in a step 516, for receiving the Polling Token 300 is necessarily operating in Detection Mode. If its own Detection Queue 105 contains less than $\Psi-$ packets, it accepts in a step 518 the Polling Token 300, and in a step 522 starts to operate in Polling Role, practically replacing the other process.

6) If the receiving process cannot accept the Polling Token 300 (because the queue contains more than $\Psi-$ packets), in a step 520, it passes the Polling Token 300 to the next process. This is again accomplished by:

- incrementing the Polling Token Request Counter of the destination process, and- decrementing its own Polling Token Completed Counter.

7) In a step 524, if there is no process that can accept the polling token, because it has been passed along all the possible processes, the polling token remains unassigned; hence, in a step 528 the process will mark the Polling Token as free, by resetting the flag 302.

8) Since no process is acting in the Polling Role, and all the process are working in Detection role, after some time, one or more Detection Queues 105 contain less than $\Psi-$ packets. If the Polling Token 300 is unassigned, all the processes that serve Detection Queues 105 with less than $\Psi-$ packets may try to obtain the lock 303 on the token; the first that succeeds, gets the token and starts to operate in the Polling Role, while the others will resume their Detection Role. This is the only contention that may occur under this second solution; this is the only case where the lock must be acquired and released.

Significantly, all the processing can be done without using any lock to protect the shared queues, since they are all accessed using the single-reader/single-writer paradigm. The only needed lock is placed on the Polling Token 300, when it is necessary to acquire it after every process in the system refused to do so (because its own Detection Queue 105 contains more that $\Psi+$ packets); in fact, at this time, there may be more than a single process that tries to obtain the Polling Token 300. A locking mechanism is necessary to ensure that only a single process eventually gets it. It is possible to tune the method by properly selecting the values of the thresholds; empirically, the values of $\Psi- = 0.3*QL$, $\Psi+ = 0.7*QL$, being QL the maximum queue length, have been adopted.

Any hash function that guarantees the three properties mentioned (coherence, fairness, and security) can be adopted. For example, classical cryptographic hash function such as MD-4, MD-5 or SHA-1 could be used, although they are computationally expensive, when compared to other type of functions. The function selected in the solution described herein is empirically one of the most efficient functions that can be used for this purpose.

In a different embodiment, it is also possible to substitute the hash function, which is stateless, with a stateful mechanism. In this scenario, the selection mechanism "remembers" the CPU that has been assigned to the analysis of packets that belong to a specific session. When a packet that initiates a new session arrives, the packet (and the corresponding session) is assigned to the CPU that has the smaller number of packets to process. With this approach, it is possible to achieve an optimal load-balancing; however, more memory and more computation time are required for doing a polling cycle.

In a different embodiment, packets in the same session are not required to be analyzed by the same detection task. Nonetheless, the analysis of data flows for intrusion detection is state-based, and it is necessary to remember some information regarding the session, to properly detect an intrusion. Therefore, in this embodiment a shared memory area is used to place state information on the monitored data flows and allow all the processes to manipulate it; this state information may include the state of a TCP connection or UDP pseudo-connection, as well as IP packet fragments and TCP packets that are to be reassembled.

This shared information can be manipulated safely only by using non-interruptible operations. Hence, the need arises to protect the shared memory buffer with some locking mechanism. Therefore, this approach increases the contention between the different processes, but allows packets from the same session to be analyzed by different detection processes. In this case, the hash function does not need to fulfill the coherence property, and can better distribute the load among the various CPUs.

Without prejudice to the underlying principles of the invention, the details and the embodiments may vary, also appreciably, with reference to what has been described by way of example only, without departing from the scope of the invention as defined by the annexed claims.

**Claims**

1. A method of processing packet flows by means of a multiprocessor system (100) including a plurality of processing units, the method including the step of distributing said packets for processing among the processing units of said plurality via a distribution function (103, 104), wherein said distribution function (103, 104) is selectively allotted to one of the processing units of said plurality,
   **characterized in that** said distribution function includes a hash function (104) and said hash function includes a secret random key.

2. The method of claim 1, **characterized in that** it includes the step of generating tags via said hash function (104), the tags generated by said hash function (104) identifying what processing unit of said plurality has to process a specific packet.

3. The method of claim 1, **characterized in that** it includes the step of arranging said distribution function as a combination of a polling function (103) reading incoming packets in said packet flows and said hash function (104) acting on said packets read by said polling function (103).

4. The method of claim 1, **characterized in that** said step of distributing said packets includes the step of copying the incoming packets in said flows in a buffer (105) coupled to a single one processing unit of said plurality.

5. The method of claim 1, **characterized in that** it includes the step of receiving (102, 105) the packets in said flows according to the single-writer/single-reader paradigm.

6. The method of claim 5, **characterized in that** it includes the step of receiving (102, 105) the packets in said flows according to the single-writer/single-reader paradigm both before (102) and after (105) distribution thereof via said distribution function (103, 104).

7. The method of claim 1, **characterized in that** it includes the step of configuring said distribution function (103, 104) in order to meet at least one of the following features:

   - said distribution function (103, 104) distributes to one given processing unit in said plurality different packets belonging to same input flow,
   - the probability of distributing said incoming packets in said flows to said processing units (105) in said plurality is uniformly distributed,
   - said distribution function (103, 104) distributes said packets for processing among the processing units of said plurality according to an independently created sequence.

8. The method of claim 1, **characterized in that** it includes said processing units in said plurality performing a role selected out of:

   - a polling role, assigned at each time only to a selected one of said processing units of said plurality to perform said distribution function,
   - a processing role of said packets in said packet flows, and
   - an inactive role wherein the respective processing unit of said plurality is inactive.

9. The method of claim 1, **characterized in that** the one processing unit of said plurality allotted said distribution function discontinues its distribution activity when at least one of the following conditions is met:

   - the respective queue of packets (105) to be processed by said one processing unit has reached a first threshold ($\Psi$+),
   - the respective queue of packets (105) to be processed by said one processing unit has reached a second threshold ($\Psi$-), lower than said first threshold, and at least one packet is dropped on any of the respective queues (105) of the processing units of said plurality, and
   - the respective processing queue (105) contains more packets than said second threshold ($\Psi$-) and the input queue (102) to the system (100) is empty.

10. A multiprocessor system (100) including a plurality of processing units for processing packet flows, wherein said processing units of said plurality are configured to support a distribution function (103, 104) for distributing said packets to the processing units of said plurality for processing thereby, wherein said processing units of said plurality are configured to be selectively allotted said distribution function (103, 104),
   **characterized in that** said processing units of said plurality are configured to support a distribution function (103, 104) including a hash function (104) and said hash function includes a secret random key.

11. The system of claim 10, **characterized in that** said processing units of said plurality are configured to support a distribution function (103, 104) for generating tags via said hash function (104), the tags generated by said hash function (104) identifying what processing unit of said plurality has to process a specific packet.

12. The system of claim 10, **characterized in that** said processing units of said plurality are configured to support a polling function (103) reading incoming packets in said packet flows and said hash function (104) acting on said packets read by said polling function (103).

13. The system of claim 10, **characterized in that** it includes buffers (105) adapted to be coupled each to a respective one of the processing units of said plurality for having copied therein the incoming packets in said flows to be processed by said respective one of the processing units of said plurality.

14. The system of claim 10, **characterized in that** it includes:

   - an input buffer (102) for loading the incoming packets in said flows,
   - a device driver (101) configured for checking whether said input buffer (102) is full, and discarding incoming packets when said input buffer (102) is full.

15. The system of claim 10, **characterized in that** the system is configured (102, 105) for receiving the packets in said flows according to the single-writer/single-reader paradigm, and **in that** it includes at least one buffer (102, 105) for receiving the packets in said packet flows, in said at least one buffer (102, 105) there being provided:

   - a reader pointer (200) addressing any filled cell that contains a first packet to be processed, and
   - a writer pointer (110) addressing the first empty cell after the filled cell to receive any following incoming packet.

16. The system of claim 15, **characterized in that** it includes registers (102, 105) configured for receiving (102, 105) the packets in said flows according to the single-writer/single-reader paradigm both before (102) and after (105) distribution thereof via said distribution function (103, 104).

17. The system of claim 10, **characterized in that** said processing units of said plurality are configured to support a distribution function (103, 104) meeting at least one of the following features:

   - said distribution function (103, 104) distributes to one given processing unit in said plurality different packets belonging to same input flow,
   - the probability of distributing said incoming packets in said flows to said processing units (105) in said plurality is uniformly distributed,
   - said distribution function (103, 104) distributes said packets for processing among the processing units of said plurality according to an independently created sequence.

18. The system of claim 10, **characterized in that** said processing units of said plurality are configured for selectively performing a role selected out of:

- a polling role, assigned at each time only to a selected one of said processing units of said plurality to perform said distribution function,
- a processing role of said packets in said packet flows, and
- an inactive role wherein the respective processing unit of said plurality is inactive.

19. The system of claim 10, **characterized in that** said processing units of said plurality are configured for discontinuing the distribution function allotted thereto when at least one of the following conditions is met:

- the respective queue of packets (105) to be processed by said one processing unit has reached a first threshold ($\Psi+$),
- the respective queue of packets (105) to be processed by said one processing unit has reached a second threshold ($\Psi-$), lower than said first threshold, and at least one packet is dropped on any of the respective queues (105) of the processing units of said plurality, and
- the respective processing queue (105) contains more packets than said second threshold ($\Psi-$) and the input queue (102) to the system (100) is empty.

20. A network intrusion detection system for monitoring activity in a network by analysing packets in said network, comprising a multiprocessor system (100) realised according to any of claims 10 to 19.

21. A computer program product, loadable in the memory of at least one computer and including software code portions for performing the steps of the method of any of claims 1 to 9.

**Patentansprüche**

1. Verfahren zum Verarbeiten von Paketströmen mittels eines Multiprozessorsystems (100), das mehrere Verarbeitungseinheiten umfasst, wobei das Verfahren den Schritt des Verteilens der Pakete zum Verarbeiten unter den mehreren Verarbeitungseinheiten über eine Verteilungsfunktion (103, 104) umfasst, wobei die Verteilungsfunktion (103, 104) selektiv einer der mehreren Verarbeitungseinheiten zugeteilt ist,
   **dadurch gekennzeichnet, dass** die Verteilungsfunktion eine Hash-Funktion (104) umfasst und die Hash-Funktion einen geheimen Zufallscode umfasst.

2. Verfahren nach Anspruch 1, **dadurch gekennzeichnet, dass** es den Schritt des Erzeugens von Marken über die Hash-Funktion (104) umfasst, wobei die Marken, welche von der Hash-Funktion (104) erzeugt sind, identifizieren, welche der mehreren Verarbeitungseinheiten ein bestimmtes Paket verarbeiten muss.

3. Verfahren nach Anspruch 1, **dadurch gekennzeichnet, dass** es den Schritt des Festsetzens der Verteilungsfunktion als Kombination einer Abfragefunktion (103), die ankommende Pakete in den Paketströmen liest, und der Hash-Funktion (104) umfasst, die auf die Pakete wirkt, welche von der Abfragefunktion (103) gelesen sind.

4. Verfahren nach Anspruch 1, **dadurch gekennzeichnet, dass** der Schritt des Verteilens der Pakete den Schritt des Kopierens der ankommenden Pakete in den Strömen in einen Puffer (105) umfasst, der mit einer der mehreren Verarbeitungseinheiten verbunden ist.

5. Verfahren nach Anspruch 1, **dadurch gekennzeichnet, dass** es den Schritt des Empfangens (102, 105) der Pakete in den Strömen gemäß dem Single-Writer/Single-Reader-Paradigma umfasst.

6. Verfahren nach Anspruch 5, **dadurch gekennzeichnet, dass** es den Schritt des Empfangens (102, 105) der Pakete in den Strömen gemäß dem Single-Writer/Single-Reader-Paradigma vor (102) und nach (105) dem Verteilen derselben über die Verteilungsfunktion (103, 104) umfasst.

7. Verfahren nach Anspruch 1, **dadurch gekennzeichnet, dass** es den Schritt des Konfigurierens der Verteilungsfunktion (103, 104) umfasst, um mindestens eine der folgenden Funktionen zu erfüllen:

- die Verteilungsfunktion (103, 104) verteilt mehrere verschiedene Pakete, die zum selben Eingangsstrom gehören, an eine der mehreren Verarbeitungseinheiten,

- die Wahrscheinlichkeit des Verteilens der ankommenden Pakete in den Strömen auf die mehreren Verarbeitungseinheiten (105) ist gleichförmig verteilt,
- die Verteilungsfunktion (103, 104) verteilt die Pakete zum Verarbeiten auf die mehreren Verarbeitungseinheiten nach einer unabhängig erzeugten Sequenz.

8. Verfahren nach Anspruch 1, **dadurch gekennzeichnet, dass** es die mehreren Verarbeitungseinheiten umfasst, die eine Rolle ausfüllen, welche aus den folgenden ausgewählt ist:

- eine Abfragerolle, die jederzeit nur an eine ausgewählte unter den mehreren Verarbeitungseinheiten zugewiesen ist, um die Verteilungsfunktion auszuführen,
- eine Verarbeitungsrolle für die Pakete in den Paketströmen, und
- eine inaktive Rolle, wobei die jeweilige Verarbeitungseinheit der mehreren Verarbeitungseinheiten inaktiv ist.

9. Verfahren nach Anspruch 1, **dadurch gekennzeichnet, dass** die eine Verarbeitungseinheit der mehreren Verarbeitungseinheiten, der die Verteilungsfunktion zugewiesen ist, ihre Verteilungsaktivität aussetzt, wenn mindestens eine der folgenden Bedingungen erfüllt ist:

- die jeweilige Schlange von Paketen (105), die von der einen Verarbeitungseinheit verarbeitet werden soll, hat einen ersten Schwellwert ($\Psi+$) erreicht,
- die jeweilige Schlange von Paketen (105), die von der einen Verarbeitungseinheit verarbeitet werden soll, hat einen zweiten Schwellwert ($\Psi-$) erreicht, der niedriger als der ersten Schwellwert ist, und mindestens ein Paket ist auf eine der jeweiligen Schlangen (105) der mehreren Verarbeitungseinheiten übertragen, und
- die jeweilige Verarbeitungsschlange (105) enthält mehr Pakete als der zweite Schwellwert ($\Psi-$), und die Eingangsschlange (102) für das System (100) ist leer.

10. Multiprozessorsystem (100), das mehrere Verarbeitungseinheiten zum Verarbeiten von Paketströmen umfasst, wobei die mehreren Verarbeitungseinheiten zum Unterstützen einer Verteilungsfunktion (103, 104) zum Verteilen der Pakete auf die mehreren Verarbeitungseinheiten zum Verarbeiten durch dieselben konfiguriert sind, wobei die mehreren Verarbeitungseinheiten so konfiguriert sind, dass ihnen die Verteilungsfunktion (103, 104) selektiv zugewiesen ist,
**dadurch gekennzeichnet, dass** die mehreren Verarbeitungseinheiten für die Unterstützung einer Verteilungsfunktion (103, 104), die eine Hash-Funktion (104) umfasst, konfiguriert sind und die Hash-Funktion einen geheimen Zufallscode umfasst.

11. System nach Anspruch 10, **dadurch gekennzeichnet, dass** die mehreren Verarbeitungseinheiten für die Unterstützung einer Verteilungsfunktion (103, 104) zum Erzeugen von Marken über die Hash-Funktion (104) konfiguriert sind, wobei die Marken, welche von der Hash-Funktion (104) erzeugt sind, identifizieren, welche der mehreren Verarbeitungseinheiten ein bestimmtes Paket verarbeiten soll.

12. System nach Anspruch 10, **dadurch gekennzeichnet, dass** die mehreren Verarbeitungseinheiten zum Unterstützen einer Abfragefunktion (103), die ankommende Pakete in den Paketströmen liest, und der Hash-Funktion (104), die auf die Pakete wirkt, welche von der Abfragefunktion (103) gelesen sind, konfiguriert sind.

13. System nach Anspruch 10, **dadurch gekennzeichnet, dass** es Puffer (105) umfasst, die für die Verbindung mit den jeweiligen Verarbeitungseinheiten der mehreren Verarbeitungseinheiten derart ausgelegt sind, dass sie darin die ankommenden Pakete der Ströme kopiert enthalten, die von den jeweiligen Verarbeitungseinheiten der mehreren Verarbeitungseinheiten verarbeitet werden sollen.

14. System nach Anspruch 10, **dadurch gekennzeichnet, dass** es folgendes umfasst:

- einen Eingangspuffer (102) zum Laden der ankommenden Pakete in den Strömen,
- einen Gerätetreiber (101), der zum Kontrollieren, ob der Eingangspuffer (102) voll ist, und zum Verwerfen ankommender Pakete konfiguriert ist, wenn der Eingangspuffer (102) voll ist.

15. System nach Anspruch 10, **dadurch gekennzeichnet, dass** das System zum Empfangen der Pakete in den Strömen gemäß dem Single-Writer/Single-Reader-Paradigma konfiguriert (102, 105) ist, und dass es mindestens einen Puffer (102, 105) zum Empfangen der Pakete in den Paketströmen in mindestens einem Puffer (102, 105) umfasst, wobei folgendes bereitgestellt ist:

- ein Lesezeiger (200), der jede gefüllte Zelle adressiert, die ein erstes Paket enthält, das verarbeitet werden soll, und
- ein Schreibzeiger (110), der die erste leere Zelle nach der gefüllten Zelle adressiert, um jedes folgende ankommende Paket zu empfangen.

16. System nach Anspruch 15, **dadurch gekennzeichnet, dass** es Register (102, 105) umfasst, die zum Empfangen (102, 105) der Pakete in den Strömen gemäß dem Single-Writer/Single-Reader-Paradigma vor (102) und nach (105) dem Verteilen derselben über die Verteilungsfunktion (103, 104) konfiguriert sind.

17. System nach Anspruch 10, **dadurch gekennzeichnet, dass** die mehreren Verarbeitungseinheiten zum Unterstützen einer Verteilungsfunktion (103, 104) konfiguriert sind, welche mindestens eine der folgenden Funktionen ausführt:

- die Verteilungsfunktion (103, 104) verteilt mehrere verschiedene Pakete, die zum selben Eingangsstrom gehören, an eine gegebene der mehreren Verarbeitungseinheiten,
- die Wahrscheinlichkeit des Verteilens der ankommenden Pakete in den Strömen auf die mehreren Verarbeitungseinheiten (105) ist gleichförmig verteilt,
- die Verteilungsfunktion (103, 104) verteilt die Pakete zum Verarbeiten auf die mehreren Verarbeitungseinheiten nach einer unabhängig erzeugten Sequenz.

18. System nach Anspruch 10, **dadurch gekennzeichnet, dass** die mehreren Verarbeitungseinheiten zum selektiven Ausführen einer Rolle konfiguriert sind, die aus folgenden ausgewählt ist:

- eine Abftagerolle, die jederzeit nur an eine ausgewählte unter den mehreren Verarbeitungseinheiten zugewiesen ist, um die Verteilungsfunktion auszuführen,
- eine Verarbeitungsrolle für die Pakete in den Paketströmen, und
- eine inaktive Rolle, wobei die jeweilige Verarbeitungseinheit der mehreren Verarbeitungseinheiten inaktiv ist.

19. System nach Anspruch 10, **dadurch gekennzeichnet, dass** die mehreren Verarbeitungseinheiten zum Unterbrechen der Verteilungsfunktion, die denselben zugewiesen ist, konfiguriert sind, wenn mindestens eine der folgenden Bedingungen erfüllt ist:

- die jeweilige Schlange von Paketen (105), die von der einen Verarbeitungseinheit verarbeitet werden soll, hat einen ersten Schwellwert ($\Psi+$) erreicht,
- die jeweilige Schlange von Paketen (105), die von der einen Verarbeitungseinheit verarbeitet werden soll, hat einen zweiten Schwellwert ($\Psi-$) erreicht, der niedriger als der ersten Schwellwert ist, und mindestens ein Paket ist auf eine der jeweiligen Schlangen (105) der mehreren Verarbeitungseinheiten übertragen, und
- die jeweilige Verarbeitungsschlange (105) enthält mehr Pakete als der zweite Schwellwert ($\Psi-$), und die Eingangsschlange (102) für das System (100) ist leer.

20. Netzeindringfeststellungssystem zur Überwachung der Aktivität in einem Netzwerk durch Analysieren der Pakete im Netzwerk, das ein Multiprozessorsystem (100) umfasst, welches gemäß einem der Ansprüche 10 bis 19 realisiert ist.

21. Computerprogrammprodukt, das in den Speicher von mindestens einem Computer geladen werden kann und Codeabschnitte zum Ausführen der Schritte des Verfahrens nach einem der Ansprüche 1 bis 9 umfasst.

**Revendications**

1. Procédé de traitement de flux de paquets au moyen d'un système multiprocesseur (100) comprenant une pluralité d'unités de traitement, le procédé comprenant l'étape consistant à distribuer lesdits paquets à traiter parmi les unités de traitement de ladite pluralité par le biais d'une fonction de distribution (103, 104), dans lequel ladite fonction de distribution (103, 104) est sélectivement allouée à l'une des unités de traitement de ladite pluralité, **caractérisé en ce que** ladite fonction de distribution comprend une fonction de hachage (104) et ladite fonction de hachage comprend une clé aléatoire secrète.

2. Procédé selon la revendication 1, **caractérisé en ce qu'**il comprend l'étape consistant à générer des balises par le biais de ladite fonction de hachage (104), les balises générées par ladite fonction de hachage (104) identifiant quelle unité de traitement de ladite pluralité doit traiter un paquet spécifique.

3. Procédé selon la revendication 1, **caractérisé en ce qu'**il comprend l'étape consistant à agencer ladite fonction de distribution en tant qu'une combinaison d'une fonction d'interrogation (103) lisant des paquets entrants dans lesdits flux de paquets et ladite fonction de hachage (104) agissant sur lesdits paquets lus par ladite fonction d'interrogation (103).

4. Procédé selon la revendication 1, **caractérisé en ce que** ladite étape de distribution desdits paquets comprend l'étape consistant à copier les paquets entrants dans lesdits flux dans un tampon (105) couplé à une unité de traitement unique de ladite pluralité.

5. Procédé selon la revendication 1, **caractérisé en ce qu'**il comprend l'étape consistant à recevoir (102, 105) les paquets dans lesdits flux selon le paradigme d'un seul inscripteur/un seul lecteur.

6. Procédé selon la revendication 5, **caractérisé en ce qu'**il comprend l'étape consistant à recevoir (102, 105) les paquets dans lesdits flux selon le paradigme d'un seul inscripteur/un seul lecteur à la fois avant (102) et après (105) la distribution de ceux-ci par le biais de ladite fonction de distribution (103, 104).

7. Procédé selon la revendication 1, **caractérisé en ce qu'**il comprend l'étape consistant à configurer ladite fonction de distribution (103, 104) pour remplir au moins l'une des caractéristiques suivantes :

   - ladite fonction de distribution (103, 104) distribue, à une unité de traitement donnée dans ladite pluralité, des paquets différents appartenant au même flux d'entrée,
   - la probabilité de distribuer lesdits paquets entrants dans lesdits flux aux dites unités de traitement (105) dans ladite pluralité est uniformément distribuée,
   - ladite fonction de distribution (103, 104) distribue lesdits paquets à traiter parmi les unités de traitement de ladite pluralité en fonction d'une séquence créée indépendamment.

8. Procédé selon la revendication 1, **caractérisé en ce qu'**il comprend l'étape consistant à ce que lesdites unités de traitement dans ladite pluralité effectuent un rôle sélectionné parmi :

   - un rôle d'interrogation assigné chaque fois uniquement à l'une sélectionnée desdites unités de traitement de ladite pluralité pour effectuer ladite fonction de distribution,
   - un rôle de traitement desdits paquets dans lesdits flux de paquets, et
   - un rôle inactif dans lequel l'unité de traitement respective de ladite pluralité est inactive.

9. Procédé selon la revendication 1, **caractérisé en ce que** l'unité de traitement de ladite pluralité à laquelle ladite fonction de distribution est allouée cesse son activité de distribution lorsqu'au moins l'une des conditions suivantes est remplie :

   - la file d'attente respective de paquets (105) à traiter par ladite unité de traitement a atteint un premier seuil ($\psi+$),
   - la file d'attente respective de paquets (105) à traiter par ladite unité de traitement a atteint un deuxième seuil ($\psi-$), inférieur au dit premier seuil, et au moins un paquet est abandonné sur l'une quelconque des files d'attente respectives (105) des unités de traitement de ladite pluralité, et
   - la file d'attente de traitement respective (105) contient plus de paquets que ledit deuxième seuil ($\psi-$) et la file d'attente d'entrée (102) dans le système (100) est vide.

10. Système multiprocesseur (100) comprenant une pluralité d'unités de traitement pour traiter des flux de paquets, dans lequel lesdites unités de traitement de ladite pluralité sont configurées pour prendre en charge une fonction de distribution (103, 104) pour distribuer lesdits paquets aux unités de traitement de ladite pluralité pour leur traitement par celles-ci, dans lequel lesdites unités de traitement de ladite pluralité sont configurées pour qu'il leur soit alloué sélectivement ladite fonction de distribution (103, 104), **caractérisé en ce que** lesdites unités de traitement de ladite pluralité sont configurées pour prendre en charge une fonction de distribution (103, 104) comprenant une fonction de hachage (104) et ladite fonction de hachage comprend une clé aléatoire secrète.

11. Système selon la revendication 10, **caractérisé en ce que** lesdites unités de traitement de ladite pluralité sont configurées pour prendre en charge une fonction de distribution (103, 104) pour générer des balises par le biais de ladite fonction de hachage (104), les balises générées par ladite fonction de hachage (104) identifiant quelle unité de traitement de ladite pluralité doit traiter un paquet spécifique.

**12.** Système selon la revendication 10, **caractérisé en ce que** lesdites unités de traitement de ladite pluralité sont configurées pour prendre en charge une fonction d'interrogation (103) lisant des paquets entrants dans lesdits flux de paquets et ladite fonction de hachage (104) agissant sur lesdits paquets lus par ladite fonction d'interrogation (103).

**13.** Système selon la revendication 10, **caractérisé en ce qu'**il comprend des tampons (105) aptes chacun à être couplés à l'une respective des unités de traitement de ladite pluralité pour qu'il y soit copié les paquets entrants dans lesdits flux à traiter par ladite une respective des unités de traitement de ladite pluralité.

**14.** Système selon la revendication 10, **caractérisé en ce qu'**il comprend :

- un tampon d'entrée (102) pour charger les paquets entrants dans lesdits flux,
- un pilote du dispositif (101) configuré pour contrôler si ledit tampon d'entrée (102) est plein et rejeter les paquets entrants lorsque ledit tampon d'entrée (102) est plein.

**15.** Système selon la revendication 10, **caractérisé en ce que** le système est configuré (102, 105) pour recevoir les paquets dans lesdits flux selon le paradigme d'un seul inscripteur/un seul lecteur, et **en ce qu'**il comprend au moins un tampon (102, 105) pour recevoir les paquets dans lesdits flux de paquets, dans ledit au moins un tampon (102, 105) il est fourni :

- un pointeur de lecteur (200) adressant toute cellule remplie qui contient un premier paquet à traiter, et
- un pointeur d'inscripteur (110) adressant la première cellule vide après la cellule remplie pour recevoir tout paquet entrant suivant.

**16.** Système selon la revendication 15, **caractérisé en ce qu'**il comprend des registres (102, 105) configurés pour recevoir (102, 105) les paquets dans lesdits flux selon le paradigme d'un seul inscripteur/un seul lecteur à la fois avant (102) et après (105) la distribution de ceux-ci par le biais de ladite fonction de distribution (103, 104).

**17.** Système selon la revendication 10, **caractérisé en ce que** lesdites unités de traitement de ladite pluralité sont configurées pour prendre en charge une fonction de distribution (103, 104) remplissant au moins l'une des caractéristiques suivantes ;

- ladite fonction de distribution (103, 104) distribue, à une unité de traitement donnée dans ladite pluralité, des paquets différents appartenant au même flux d'entrée,
- la probabilité de distribuer lesdits paquets entrants dans lesdits flux aux dites unités de traitement (105) dans ladite pluralité est uniformément distribuée,
- ladite fonction de distribution (103, 104) distribue lesdits paquets à traiter parmi les unités de traitement de ladite pluralité en fonction d'une séquence créée indépendamment.

**18.** Système selon la revendication 10, **caractérisé en ce que** lesdites unités de traitement de ladite pluralité sont configurées pour effectuer sélectivement un rôle sélectionné parmi :

- un rôle d'interrogation assigné chaque fois uniquement à l'une sélectionnée desdites unités de traitement de ladite pluralité pour effectuer ladite fonction de distribution,
- un rôle de traitement desdits paquets dans lesdits flux de paquets, et
- un rôle inactif dans lequel l'unité de traitement respective de ladite pluralité est inactive.

**19.** Système selon la revendication 10, **caractérisé en ce que** lesdites unités de traitement de ladite pluralité sont configurées pour cesser la fonction de distribution qui leur est allouée lorsqu'au moins l'une des conditions suivantes est remplie :

- la file d'attente respective de paquets (105) à traiter par ladite unité de traitement a atteint un premier seuil ($\psi$+),
- la file d'attente respective de paquets (105) à traiter par ladite unité de traitement a atteint un deuxième seuil ($\psi$-), inférieur au dit premier seuil, et au moins un paquet est abandonné sur l'une quelconque des files d'attente respectives (105) des unités de traitement de ladite pluralité, et

- la file d'attente de traitement respective (105) contient plus de paquets que ledit deuxième seuil ($\psi$-) et la file d'attente d'entrée (102) dans le système (100) est vide.

20. Système de détection d'intrusion de réseau pour surveiller l'activité dans un réseau en analysant des paquets dans ledit réseau, comprenant un système multiprocesseur (100) réalisé selon l'une quelconque des revendications 10 à 19.

21. Produit de programme informatique, pouvant être chargé dans la mémoire d'au moins un ordinateur et comprenant des parties de code logiciel pour effectuer les étapes du procédé selon l'une quelconque des revendications 1 à 9.

Fig. 1

230

210

220

200

102

*Fig. 2*

EP 1 877 899 B1

*Fig. 3*

Fig. 4

EP 1 877 899 B1

Fig. 5

EP 1 877 899 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6578147 B
- US 20040107361 A
- US 6631422 B
- EP 1349065 A

**Non-patent literature cited in the description**

- Performance Hashing-Based Schemes for Internet Load Balancing. **Z. Cao ; Z. Whang ; E. Zegura.** Tech. Rep. GIT-CC-99-14. College of Computing
- **S. Lu ; J. Gong ; S. Rui.** A Load Balancing Algorithm for High Speed Intrusion Detection. *APAN Meeting,* 2003
- **R. J. Jenkins freely.** *Hash Function for Hash Table Lookup*